(19) Europäisches Patentamt / European Patent Office / Office européen des brevets

(11) **EP 4 647 981 A1**

(12) **EUROPEAN PATENT APPLICATION**

(43) Date of publication:
**12.11.2025 Bulletin 2025/46**

(21) Application number: **24193848.9**

(22) Date of filing: **09.08.2024**

(51) International Patent Classification (IPC):
**G06Q 10/04** $^{(2023.01)}$   **G06Q 50/06** $^{(2024.01)}$

(52) Cooperative Patent Classification (CPC):
**G06Q 10/04; G06Q 50/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.05.2024 TW 113117170**

(71) Applicant: **Wistron Corporation
New Taipei City 22181 (TW)**

(72) Inventor: **LI, Chun-Hsien
22181 New Taipei City (TW)**

(74) Representative: **Becker, Eberhard
Becker Kurig & Partner
Patentanwälte mbB
Bavariastraße 7
80336 München (DE)**

Remarks:
Claims filed after the date of filing of the application
(Rule 68(4) EPC).

(54) **ENERGY ALLOCATION METHOD AND COMPUTING APPARATUS**

(57)   An energy allocation method and computing apparatus (10). In the method, the demand for target energy is determined based on the limit ratio and electricity consumption, where the limit ratio is the proportion of target energy to all energy, and the electricity consumption is the statistic of all energy used. The supply difference between the target energy and other energy sources in all energy sources is compared, where all energy sources include the target energy source and other energy sources, and the supply difference is the difference in the payment amount to obtain energy. A target condition corresponding to the target energy is determined based on the demand and supply differences, and the recommended amount of target energy is determined based on the target condition.

The demand for target energy is determined based on the limit ratio and electricity consumption ⟶ S210

The supply difference between the target energy and other energy sources in all energy sources is compared ⟶ S220

The target conditions corresponding to the target energy are determined based on the demand and supply differences, and the recommended amount of target energy is determined based on the target conditions ⟶ S230

**FIG. 2**

EP 4 647 981 A1

**Description**

TECHNICAL FIELD

The disclosure relates to an energy management technology, and in particular relates to an energy allocation method and a computing apparatus.

BACKGROUND

In recent years, the issue of energy conservation and carbon reduction has gained significant attention, such that companies have made plans for carbon reduction strategies in advance. In addition to being familiar with the renewable energy purchase process and regulatory restrictions, it is necessary to first assess the overall costs of carbon reduction and the electricity consumption targets. This facilitates the overall operations of companies and aid in achieving carbon neutrality objectives. It is worth noting that there are many options for renewable energy, including: green electricity, certificates, etc. If the purchasable amount of green electricity is relatively limited and its recognition level is relatively high, its price is usually significantly higher, and it is necessary to consider whether the supply is sufficient. Although companies may construct their own power generation equipment, the scope of construction is limited and they inevitably need to purchase power from external sources. This also illustrates the importance of global renewable energy purchases.

Regarding the planning of renewable energy, it currently relies solely on the expertise of specialists. That is, the energy allocation of companies is currently planned manually. However, such an operation method may be subject to unexpected conditions and errors, and may not achieve the goals of energy conservation and carbon reduction.

SUMMARY

An energy allocation method and a computing apparatus, which may recommend appropriate energy allocation and achieve energy conservation and carbon reduction, are provided in the disclosure.

An energy allocation method according to the embodiment of the disclosure is suitable for implementation by a processor. The energy allocation method includes the following operation. A demand for target energy source is determined according to a limit ratio and electricity consumption, where the limit ratio is a proportion of the target energy source to all energy sources, and the electricity consumption is a statistic of all energy sources used. A supply difference between the target energy source and other energy sources in all energy sources is compared, where all energy sources include the target energy source and other energy sources, and the supply difference is the difference in the payment amount to obtain energy source. A target condition corresponding to the target energy source is determined according to the demand and supply differences, and a recommended amount of the target energy source is determined according to the target condition.

A computing apparatus of the embodiment of the disclosure includes a storage and a processor. The storage stores program code. The processor couples the storage, loads the program code, and executes the following operation. A demand for target energy source is determined according to a limit ratio and electricity consumption, where the limit ratio is a proportion of the target energy source to all energy sources, and the electricity consumption is a statistic of all energy sources used. A supply difference between the target energy source and other energy sources in all energy sources is compared, where all energy sources include the target energy source and other energy sources, and the supply difference is the difference in the payment amount to obtain energy source. Target conditions corresponding to the target energy source are determined according to the demand and supply differences, and a recommended amount of the target energy source is determined according to the target conditions.

Based on the above, the energy allocation method and computing apparatus of embodiments of the disclosure may set target conditions according to demand and supply differences between different energy sources, and provide the recommended amount accordingly. In this way, the efficiency of energy decision-making may be improved and more in line with energy-saving requirements.

In order to make the above-mentioned features and advantages of the disclosure comprehensible, embodiments accompanied with drawings are described in detail below.

BRIEF DESCRIPTION OF THE DRAWINGS

FIG. 1 is an element block diagram of a computing apparatus according to an embodiment of the disclosure.
FIG. 2 is a flowchart of an energy allocation method according to an embodiment of the disclosure.
FIG. 3 is a flowchart illustrating the determination of the limit ratio according to an embodiment of the disclosure.

FIG. 4 is a flowchart illustrating the consumption prediction according to an embodiment of the disclosure.

FIG. 5 is a flowchart illustrating the process of obtaining the payment amount according to an embodiment of the disclosure.

FIG. 6 is a flowchart illustrating the determination of the recommended amount according to an embodiment of the disclosure.

DETAILED DESCRIPTION OF DISCLOSED EMBODIMENTS

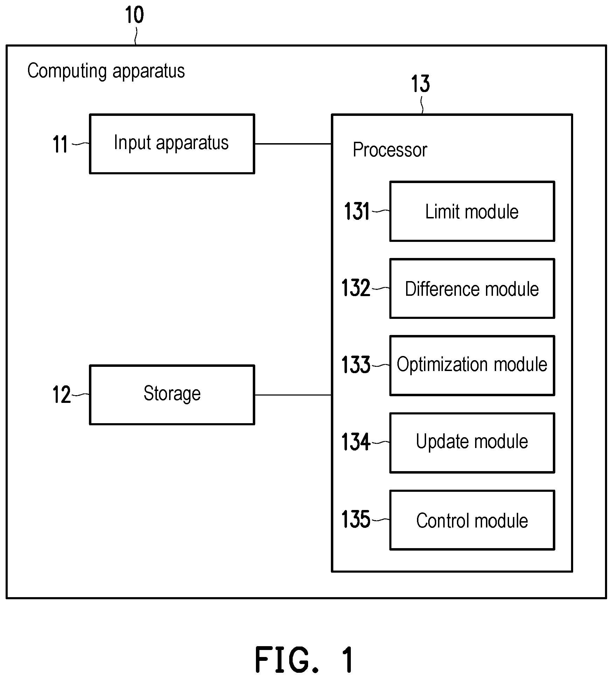

FIG. 1 is an element block diagram of a computing apparatus 10 according to an embodiment of the disclosure. Referring to FIG. 1, the computing apparatus 10 includes (but not limited to) an input apparatus 11, a storage 12, and a processor 13. The computing apparatus 10 may be a mobile phone, a tablet computer, a notebook computer, a desktop computer, a server, a voice assistant apparatus, a smart home appliance, a wearable apparatus, a vehicle-mounted system, or other electronic apparatuses.

The input apparatus 11 may be a keyboard, a mouse, a touch panel, or other apparatuses configured to input user operations (e.g., click, slide, or drag operations). Alternatively, the input apparatus 11 is, for example, a communication transceiver circuit that supports Bluetooth, Wi-Fi, mobile network, optical fiber network or other communication technologies, and may, for example, support transmission interfaces such as USB, UART, or Thunderbolt, and thereby receive data from or transmit data to other apparatuses.

The storage 12 may be any type of fixed or movable random access memory (RAM), read only memory (ROM), flash memory, conventional hard disk drive (HDD), solid-state drive (SSD) or similar components. In one embodiment, the storage 12 is configured to store program codes, software modules, configurations, data (e.g., text data, statistics, recommended amount, or supply differences) or files, which are described in detail in subsequent embodiments.

The processor 13 is coupled to the input apparatus 11 and the storage 12. The processor 13 may be a central processing unit (CPU), a graphics processing unit (GPU), or other programmable general-purpose or special-purpose microprocessors, a digital signal processor (DSP), a programmable controller, a field programmable gate array (FPGA), an application-specific integrated circuit (ASIC), a neural network accelerator, or other similar components, or combinations of components thereof. In one embodiment, the processor 13 is configured to execute all or some of the operations of the computing apparatus 10, and may load and execute various program codes, software modules, files, and data stored in the storage device 12.

In one embodiment, the storage 12 stores program codes of the limit module 131, the difference module 132, the optimization module 133, the update module 134, and the control module 135. The processor 13 may load the program codes of these modules from the storage 12 and execute the method process of the embodiment of the disclosure (to be described in detail later).

Hereinafter, the method according to the embodiment of the disclosure is described in conjunction with various apparatuses, components, and modules in the computer apparatus 10. Each process of the method may be adjusted according to the implementation, and is not limited to thereto.

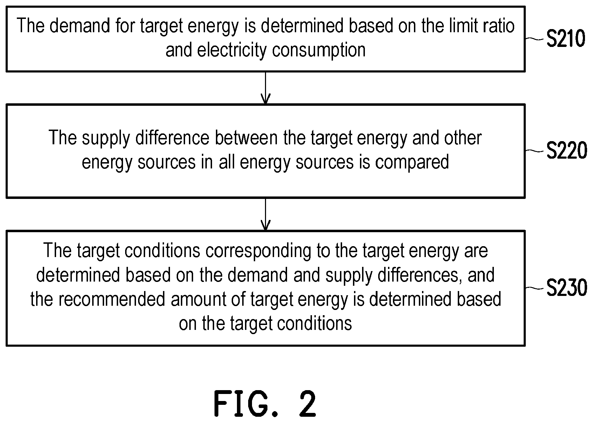

FIG. 2 is a flowchart of an energy allocation method according to an embodiment of the disclosure. Referring to FIG. 2, the processor 13 determines the demand for target energy source according to the limit ratio and electricity consumption through the limit module 131 (step S210). Specifically, the limit ratio is a proportion of the target energy source to all energy sources. The target energy source may include sources such as solar energy, wind power energy, hydropower energy, or other renewable/green energy. All energy sources include the target energy source and other energy sources. Compared to renewable energy (as the target energy source), other energy sources may be thermal power energy or nuclear energy. However, depending on different design requirements, the type of target energy source may change, and the embodiment of the disclosure is not limited. The limit ratio is the proportion of the acquisition amount of the target energy source to the acquisition amount of all energy sources, that is, the proportion of the target energy source among all available energy source. The mathematical formula for the limit ratio may be the acquisition amount of the target energy source divided by the acquisition amount of all energy sources.

In one embodiment, the power supply bureau may issue official specifications for purchasing renewable energy and limit the proportion of renewable energy purchased for industrial electricity consumption (which may serve as a limit ratio). In another embodiment, the value of the limit ratio is defined through data received by the input apparatus 11 or user operation.

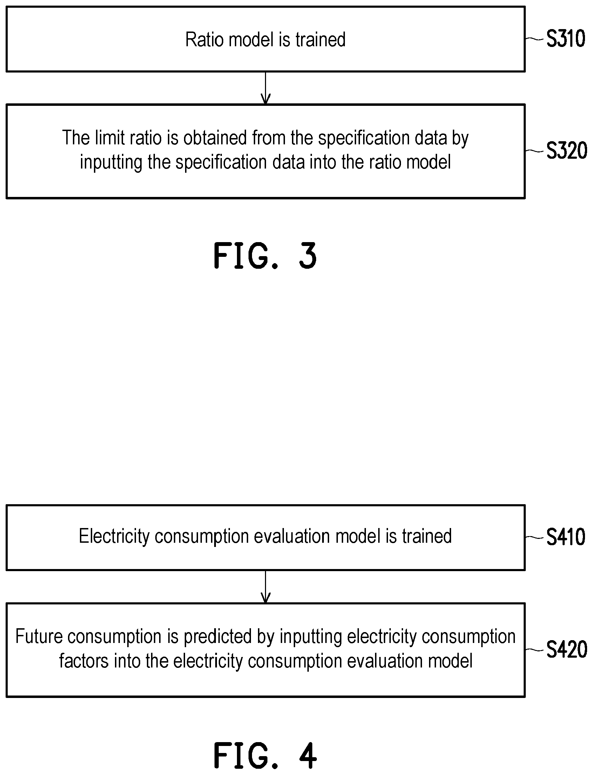

FIG. 3 is a flowchart illustrating the determination of the limit ratio according to an embodiment of the disclosure. Referring to FIG. 3, the limit module 131 may train the ratio model (step S310). The ratio model is trained through a machine learning algorithm. The ratio model is trained to understand the correlation between specification data and the limit ratio. The specification data is recorded data related to the proportion of the target energy source. The specification data may be in text form/format, audio form, image form, or other forms. The machine learning algorithm includes support vector regression (SVR), convolutional neural network (CNN), recurrent neural network (RNN), multilayer perceptron, generative adversarial network (GAN), or other algorithms. The machine learning algorithm may analyze labeled samples (e.g., specification samples with a determined limit ratio) to establish correlations between specification data (i.e., the input to the model) and the limit ratio (i.e., the output of the model). The ratio model is a model constructed through learning and may be utilized to make inferences to data to be evaluated (e.g., specification data to be evaluated) in order to identify the limit ratio recorded by the specification data.

In one embodiment, the specification data is in text form, and the machine learning algorithm includes a natural language processing algorithm. The natural language processing (NLP) algorithm is, for example, dual-level collaborative transformer (DLCT), generative pre-training (GPT), or bidirectional encoder representation from transformer (BERT), but not limited thereto. Natural language processing attempts to identify the interaction between computers and human language, and further processes and analyzes large amounts of natural language data. In one embodiment, a ratio model trained by a natural language processing algorithm may understand the textual content of the specification data and may be used to obtain the content of the textual content regarding the limit ratio.

In one embodiment, the natural language processing algorithm may be combined with other machine learning algorithms such as GPT and SVR, or BERT and SVR.

Taking the model training of BERT and SVR as an example, Table (1) shows the relationship between the specification sample and the limit ratio. The specification sample is the textual content of a historical specification. The content of Table (1) may serve as input for the training data for parameter tuning of the ratio model based on BERT and SVR, and the model parameters are evaluated. That is, it is used to train model parameters.

Table (1)

| Year | Region | Historical power supply bureau limitation text | Limit ratio |
|------|--------|------------------------------------------------|-------------|
| 2020 | A | According to the regulations of power supply bureau of the region A, the amount of green electricity purchased by each company is limited to 90% of the overall purchased electricity | 90% |
| 2021 | B | According to the regulations of power supply bureau of the region B, based on the development of renewable energy, the limit on the amount of green electricity purchased by each company is adjusted to 80% of the overall purchased electricity | 80% |

The limit module 131 may obtain the limit ratio from the specification data by inputting the specification data into the ratio model (step S320). As explained in step S310, the ratio model is a machine learning model trained by a machine learning algorithm, and the correlation between the specification data and the limit ratio is known. Therefore, by inputting the specification data into the ratio model, the ratio model may output the limit ratio corresponding to the specification data, that is, the limit ratio is obtained from the specification data.

For example, Table (2) shows the limit ratio of the target energy source (taking renewable energy as an example) obtained after inputting the specification data in text form into the ratio model:

Table (2)

| Year | Region | 供電局提供的文本形式的規範資　料 (X) | Limit ratio (Y) |
|------|--------|------------------------------------------------|-------------|
| 2023 | A | According to the regulations of power supply bureau of the region A, the amount of green electricity purchased by each company is limited to 90.6% of the overall purchased electricity | 90.6% |
| 2023 | B | According to the regulations of power supply bureau of the region B, based on the development of renewable energy, the limit on the amount of green electricity purchased by each company is adjusted to 97% of the overall purchased electricity | 97% |
| 2023 | C | According to the regulations of power supply bureau of the region C, the amount of green electricity purchased by each company is limited to 80% of the overall purchased electricity | 80% |

In another embodiment, the processor 13 may receive the trained ratio model through the input apparatus 11. That is, the limit ratio corresponding to the specification data is determined by the ratio model trained by other apparatuses. In one embodiment, the limit module 131 may convert specification data in image or voice form into text form, and then input the specification data into a ratio model trained by a natural language processing algorithm.

In one embodiment, the electricity consumption is a statistic of all energy sources used. All energy sources include the target energy source and other energy sources. The electricity consumption is the sum of the electricity consumption of the target energy source and the electricity consumption of other energy sources. The electricity consumption may be limited to specific geographic/administrative regions, buildings and/or units, for example, the electricity consumption of automobile factories in a certain region. The electricity consumption may be limited to specific time intervals, for example, one year, six months, or two weeks.

In one embodiment, the electricity consumption includes future consumption, that is, the electricity consumption of all energy sources during one or more future time intervals after the current time point. In one embodiment, the limit module 131 may predict future consumption according to the growth trend corresponding to historical consumption. The growth trend is, for example, the average annual change rate, the compound annual growth rate (CAGR), or the internal rate of return (IRR). Historical consumption is the electricity consumption of all energy sources during one or more previous time intervals before the current time point. In one embodiment, the limit module 131 may receive electricity consumption data storing historical consumption through the input apparatus 11 and obtain the value or content of the historical consumption from the electricity consumption data.

The limit module 131 may set the change in electricity consumption (i.e., future consumption) in the future time interval to be the same as the change in electricity consumption (i.e., historical consumption) in the historical time interval, or set the relationship between the change in future consumption and the change in historical electricity consumption as a linear or nonlinear function.

For example, Table (3) is the total annual electricity consumption (i.e., historical consumption) in region A from 2015 to 2022:

Table (3)

| Year | 2015 | 2016 | 2017 | 2018 |
|---|---|---|---|---|
| Total annual electricity consumption (10,000 kWh) | 1.00 | 1.23 | 1.41 | 1.43 |
| Year | 2019 | 2020 | 2021 | 2022 |
| Total annual electricity consumption (10,000 kWh) | 1.44 | 1.32 | 1.92 | 2.00 |

Taking CAGR as an example, the annual growth trend from 2015 to 2022 is $(1.92/1.00)^{(1/7)}-1=0.097$, which means that the average annual historical consumption increases by 0.097 times. Therefore, the limit module 131 may determine the total electricity consumption in region A in 2023 to be $1.92*(1+0.097) = 2.10$ (10,000 kWh) (i.e., future consumption) according to the same growth trend (e.g., CAGR is 0.097). Similarly, the future consumption for other regions may be obtained in the same way.

FIG. 4 is a flowchart illustrating the consumption prediction according to an embodiment of the disclosure. Referring to FIG. 4, the limit module 131 may train the electricity consumption evaluation model (step S410). The electricity consumption evaluation model is trained through a machine learning algorithm. The electricity consumption evaluation model is trained to understand the correlation between electricity consumption factors and electricity consumption. Electricity consumption factors include historical consumption, product production volume, human resources, external/environmental temperature, or a mathematical function of at least two of the above factors (e.g., multiplication, division, average, or weighted calculation). The machine learning algorithm is, for example, linear regression, support vector machine (SVM), random forest, generative adversarial network (GAN), or other algorithms. The machine learning algorithm may analyze labeled samples (e.g., factor samples with a determined electricity consumption) to establish correlations between one or more electricity consumption factors (i.e., inputs to the model) and electricity consumption (i.e., output of the model). The electricity consumption evaluation model is a model constructed through learning, and may be utilized to make inferences to data to be evaluated (e.g., one or more electricity consumption factors to be evaluated), to predict the future consumption corresponding to the electricity consumption factors.

For example, Table (4) shows the electricity consumption factors corresponding to multiple regions (e.g., historical consumption and product annual production volume):

Table (4)

| Year | Region | Historical consumption (kWh) | Annual production volume (pcs) |
|---|---|---|---|
| 2020 | A | 20,000 | 1,000 |
| 2021 | B | 10,000 | 200 |
| 2022 | C | 40,000 | 2,000 |

The limit module 131 calculates the annual production volume in other years of a specific region based on the values in Table (4):

Table (5)

| Year | Region | Annual production volume (pcs) |
|------|--------|-------------------------------|
| 2020 | A | 1,000 |
| 2021 | A | 1,200 |
| 2022 | A | 2,000 |

Table (5) takes region A as an example to calculate the growth trend of annual production volume (e.g., average annual change rate, CAGR, or IRR). Taking the average annual change rate as an example, the annual growth trend of the annual production volume in region A is (2,000-1,000)/1,000/2 =0.50; taking CAGR as an example, the annual growth trend of region A is (2,000/1,000)^(1 /2)-1=0.414. Similarly, the growth trend may be calculated for different electricity consumption factors (e.g., human resource or external air temperature) in different regions.

The limit module 131 may simulate variables related to electricity consumption in each year according to the growth trend: taking region A as an example, assuming that the required shipment volume in 2023 is 2,828 pieces, it also means that the annual production volume is 2,828 pieces. Regarding future variables in other regions, taking the CAGR annual growth trend as an example, the annual production volume in 2023 is 2,000*(1+0.414)=2,828 pieces. Similarly, each region may also produce the corresponding variables in 2023 under the conditions of other power factors (e.g., human resource or external air temperature):

Table (6)

| Year | Region | Annual production volume (pcs) |
|------|--------|-------------------------------|
| 2023 | A | 2,828 |
| 2023 | B | 150 |
| 2023 | C | 1,800 |

Next, the limit module 131 inputs the electricity consumption factors (e.g., the simulation variables recorded in Table (6)) into the electricity consumption evaluation model, and predicts the future consumption accordingly:

Table (7)

| Year | Region | Future consumption (kWh) |
|------|--------|--------------------------|
| 2023 | A | 21,000 |
| 2023 | B | 12,000 |
| 2023 | C | 35,000 |

In one embodiment, the demand of the target energy source is the product of the limit ratio and the electricity consumption. In one embodiment, the self-supply amount may be deducted from the electricity consumption first, and then the demand of the target energy source is obtained by multiplying the deducted electricity consumption by the limit ratio. The self-supply amount may refer to the electricity generation generated from power generation equipment that is capable of generating its own target energy source, for example, the electricity generation generated by solar panels.

As an example of the demand, taking the limit ratio in Table (2) and the future consumption (as the electricity consumption in step S210) in Table (5) as an example:

Table (8)

| Year | Region | Future consumption (kWh) | Self-supply amount (kWh) | Limit ratio | Demand (kWh) |
|------|--------|--------------------------|--------------------------|-------------|--------------|
| 2023 | A | 21,000 | 1,000 | 90.6% | 18,120 |
| 2023 | B | 12,000 | 2,000 | 97% | 9,700 |
| 2023 | C | 35,000 | 5,000 | 80% | 24,000 |

Taking region A as an example, its demand in 2023 is (21000-1000)*90.6% = 18120 (kWh). Similarly, the corresponding demand in other regions may be obtained.

In one embodiment, the limit module 131 may set a target amount of target energy source within a specific period (e.g., one year, half a year, or three months): taking the actual situation as an example, the amount of renewable energy generated each year is limited, and the target amount of renewable energy for each year may also be set in conjunction with carbon reduction planning. Taking the target energy source is green electricity as an example: for 2023, the target energy source is required to reach a target amount of 15% of the total electricity consumption of the company.

The limit module 131 may calculate the total amount of demand for multiple regions, buildings, and/or units. For example, assuming that global companies require a target amount of 15% of green electricity and regions A, B, and C in the above example are the different operating regions of a certain company, their total electricity consumption in 2023 (e.g., the sum of future consumption) is 68,000 kWh (=21,000+12,000+35,000), and the demand for green electricity is 68,000*15% = 10,200 (kWh).

Referring to FIG. 2, the processor 13 compares the supply difference between the target energy source and other energy sources among all energy sources through the difference model 132 (step S220). Specifically, as explained above, all energy sources include the target energy source and other energy sources. For example, the target energy is renewable energy, and the other energy source is electric energy produced by thermal energy, but not limited thereto. The supply difference is the difference in the payment amount to obtain the energy source. The payment amount may be the purchase cost, purchase price or other objects of equivalent value exchanged for energy. In one embodiment, the supply difference is the difference between the payment amount to obtain the target energy source and the payment amount to obtain other energy sources.

For example, in each region (or country), the purchase price of energy from different power supply bureaus or power companies may be different. It is also possible that renewable energy (e.g., solar, wind or, hydropower) is generated in different ways such that its purchase price varies from supplier to supplier.

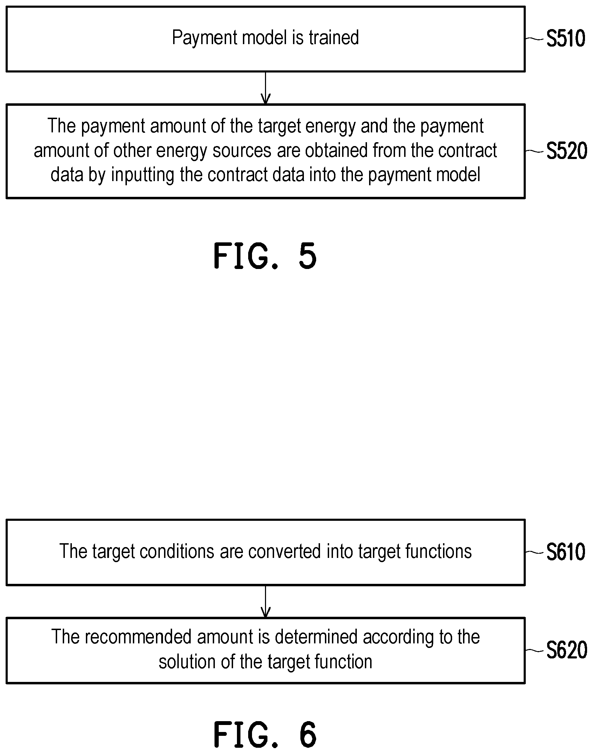

FIG. 5 is a flowchart illustrating the process of obtaining the payment amount according to an embodiment of the disclosure. Referring to FIG. 5, the difference module 132 may train the payment model (step S510). Specifically, the payment model is trained through a machine learning algorithm. The payment model is trained to understand the correlation between contract data and payment amount. The contract data is recorded data related to the payment amount required to obtain target energy source. The contract data may be in text form/format, audio form, image form, or other forms. The machine learning algorithm includes support vector regression (SVR), convolutional neural network (CNN), recurrent neural network (RNN), multilayer perceptron, generative adversarial network (GAN), or other algorithms. The machine learning algorithm may analyze labeled samples (e.g., contract samples with a determined payment amount) to establish correlations between contract data (i.e., the input to the model) and the payment amount (i.e., the output of the model). The payment model is a model constructed through learning and may be utilized to make inferences to data to be evaluated (e.g., contract data to be evaluated) in order to identify the payment amount recorded by the contract data.

In one embodiment, the contract data is in text form, and the machine learning algorithm includes a natural language processing algorithm. The natural language processing (NLP) algorithm is, for example, dual-level collaborative transformer (DLCT), GPT, or BERT, but not limited thereto. In one embodiment, a payment model trained by a natural language processing algorithm may understand the textual content of the contract data and may be used to obtain the content of the textual content regarding the payment amount to obtain energy source.

In one embodiment, the natural language processing algorithm may be combined with other machine learning algorithms such as GPT and SVR, or BERT and SVR.

The difference module 132 may obtain the payment amount of the target energy source and the payment amount of other energy sources from the contract data by inputting the contract data into the payment model (step S520). The supply difference is the difference between the payment amount to obtain the target energy source and the payment amount to obtain other energy sources. As explained in step S510, the payment model is a machine learning model trained by a machine learning algorithm, and the correlation between the contract data and the payment amount is known. Therefore, by inputting the contract data into the payment model, the payment model may output the payment amount corresponding to the contract data, that is, the payment amount is obtained from the contract data.

For example, Table (9) shows the payment amount (taking electricity price/purchase price as an example) and supply difference (taking price difference as an example) of the target energy source (taking renewable energy as an example) after inputting the contract data in text form into the payment model:

Table (9)

| Year | Region | Green electricity supplier | Annual average electricity price (yuan/kWh) | Renewable energy price (yuan/kWh) | Price difference (yuan/kWh) |
|------|--------|---------------------------|-------------------------------------------|-----------------------------------|----------------------------|
| 2023 | A | I | 4.0 | 6.5 | 2.5 |

(continued)

| Year | Region | Green electricity supplier | Annual average electricity price (yuan/kWh) | Renewable energy price (yuan/kWh) | Price difference (yuan/kWh) |
|------|--------|---------------------------|---------------------------------------------|-----------------------------------|-----------------------------|
| 2023 | A | II | 4.0 | 6.8 | 2.8 |
| 2023 | A | III | 4.0 | 6.0 | 2.0 |

For region A, a. Price of other energy sources: the electricity price is affected by the season. It is assumed that the electricity price in summer (July-September) is 5.5 (yuan/kWh) and the total electricity is 8,000 (kWh). The electricity price in seasons other than summer is 3.0 (yuan/kWh), and the total electricity is 13,000 (kWh). Therefore, the overall annual average electricity price is 4.0 (yuan/kWh) (i.e., (8,000*5.5+13,000*3.0)/21,000), where "yuan" is the Taiwanese currency as an example. b. Price of renewable energy sources: there are differences among different suppliers. Taking three suppliers I, II, and III as an example, negotiations with factories in each region are required to obtain renewable energy prices (e.g., purchase prices of green electricity), which are 6.5 (yuan/kWh), 6.8 (yuan/kWh) and 6.0 (yuan/kWh) respectively. c. Price difference: that is, renewable energy price - average electricity price (e.g., other energy source prices).

In one embodiment, the difference module 132 may convert contract data in image or voice form into text form, and then input the specification data into a payment model trained by a natural language processing algorithm.

The difference module 132 may also identify reference differences (which may be considered as appropriate/final supply differences) for each region, building, and/or unit from multiple suppliers. Taking Table (9) as an example, the lowest renewable energy price among multiple suppliers is the first choice, so the reference difference is the minimum price difference, that is, the price difference corresponding to supplier III is 2.0 (yuan/kWh). Similarly, the corresponding reference differences for other regions may be determined:

Table (10)

| Year | Region | Reference difference (yuan/kWh) |
|------|--------|--------------------------------|
| 2023 | A | 2.0 |
| 2023 | B | 1.2 |
| 2023 | C | 1.0 |

Referring to FIG. 2, the processor 13 determines the target conditions corresponding to the target energy according to the demand and supply differences and the recommended amount of target energy according to the target conditions through the optimization module 133 (step S230). Specifically, the target conditions are limiting conditions that define the recommended amount of target energy source according to the demand and/or supply differences. In one embodiment, the target conditions corresponding to the target energy source include at least one of the following: a total amount upper limit for one or more electricity consumption regions (e.g., the sum of recommended amounts for one or more electricity consumption regions); weighted calculation of the recommended amount and the corresponding supply difference in one or more electricity consumption regions; and recommended ranges for one or more electricity consumption regions. However, depending on different design requirements, the content of the target conditions may change.

FIG. 6 is a flowchart illustrating the determination of the recommended amount according to an embodiment of the disclosure. Referring to FIG. 6, the optimization module 133 may convert the target conditions into target functions (step S610). Specifically, the target function is a function formed of a set of variables. The parameters in the target conditions may serve as variables in the target function, for example, the demand, or weighted/weighting calculation that uses supply differences as weights for the recommended amount.

For example, Table (11) shows the future consumption, demand, and supply differences of three regions:

Table (11)

| Year | Regio n | Future consumption (kWh) | Demand (kWh) | Supply difference (yuan/kWh) |
|------|---------|--------------------------|--------------|------------------------------|
| 2023 | A | 21000 | 18000 | 2.0 |
| 2023 | B | 12000 | 9700 | 1.2 |
| 2023 | C | 35000 | 24000 | 1.0 |

The optimization module 133 may set "minimizing payment amount" (e.g., minimizing purchase costs) as the goal. Taking each annual budget as an example, the corresponding threshold for purchase costs is set to 15,300 (yuan). If the total cost is less than the threshold, the cost limit is met. In addition, the specific strategic condition may be "Based on the supply limits of regions Band C (e.g., lower prices or more difficult to purchase), the recommended amount is required to be set in the same proportion (50%:50%)". Therefore, the target condition may be converted into the following target function:

$$X1+X2+X3 = 10200\cdots(1)$$

$$X1*2+X2*1.2+X3*1 \leq 15300\cdots(2)$$

$$18000 \geq X1 \geq 1000, X2 = X3 \geq 1000, X2 \leq 9700, X3 \leq 24000\cdots(3)$$

Function (1) shows that the total amount upper limit of the recommended amounts X1, X2, and X3 in the three regions is 10,200 (kWh); Function (2) shows a weighted/weighting calculation that takes the supply differences in Table (11) as the weights of the corresponding region; Function (3) shows the upper and/or lower limit (i.e., recommended range) of the recommended amounts X1, X2, and X3 in the three regions, where the recommended amounts X2 and X3 are the same to comply with the above strategic condition.

The optimization module 133 may determine the recommended amount according to one or more solutions of the target function (step S620). Specifically, a solution is a feasible solution that meets/satisfies the target function, such as the feasible solutions meeting the above Function (1) to Function (3). That is, the value of the recommended amount is the solution. In one embodiment, the optimization module 133 may determine one or more solutions through an optimization algorithm (e.g., Skyline Query or image resolution method). For example, Table (12) is a combination of multiple solutions that meet Function (1) to Function (3) obtained through Skyline Query:

Table (12)

| Solution combination | X1 | X2 | X3 | Purchase cost |
|---|---|---|---|---|
| 1 | 4,200 | 3,000 | 3,000 | 15,000 |
| 2 | 3,400 | 3,400 | 3,400 | 14,280 |
| 3 | 2,600 | 3,800 | 3,800 | 13,560 |
| 4 | 1,000 | 4,600 | 4,600 | 12,120 |

The purchase cost is the purchase price (i.e., the payment amount to obtain the target energy source) after the solutions in the same row are used as the recommended amounts. It is worth noting that the optimization algorithm may exclude solutions that do not meet the target function. For example, {X1, X2, X3= 19400, 3400, 3400} are excluded. In addition, there may be other alternatives to the algorithm for finding the (optimal) solution to the target function.

In one embodiment, the optimization module 133 may select a final solution from multiple solutions and use the final solution as the recommended amount. That is, the value of the recommended amount is the final solution. In one embodiment, the condition for selecting the final solution is minimizing the payment amount, for example, "the purchase cost reduction rate is the highest", or "the purchase cost is the lowest". Taking the first combination in Table (12) as an example, the reduction rate is |15000-15300|/15300 = 1.96%.

In one embodiment, the optimization module 133 may select the optimal solution from multiple solutions through an optimization algorithm (e.g., grid search or Newton's algorithm). Taking grid search as an example, the target function is defined as:

$$argmax|X1*2+X2*1.2+X3*1-15300|/15300\cdots(4),$$

where X1, X2, and X3 are the recommended amounts for regions A, B, and C. The optimization module 133 substitutes multiple solutions (combinations thereof) into Target Function (4), and iterates Target Function (4) to find the maximum target function value (e.g., the reduction rate of the maximum purchase cost).

Taking Table (12) as an example, the reduction rate of the maximum purchase cost is - 20.7%, so the recommended amount proportion of each region (as a percentage of total electricity) is:

Table (13)

| Year | Region | Recommended amount of green electricity (kWh) | Purchase proportion (as a percentage of total electricity) |
|------|--------|-----------------------------------------------|-------------------------------------------------------------|
| 2023 | A | 1,000 | 1.4% |
| 2023 | B | 4,600 | 6.8% |
| 2023 | C | 4,600 | 6.8% |

It should be noted that in addition to green electricity, the recommended amounts for other renewable energy sources or carbon markets are also determined in accordance with the aforementioned method, and thus are not repeated herein.

In one embodiment, the processor 13 may adjust the recommended amount according to one or more variation factors through the update module 134. The variation factors include at least one of rules, contracts, and equipment changes. The rules are, for example, environmental, social, and corporate governance (ESG)-related standards (e.g., global reporting initiative (GRI), sustainable development goals (SDGs), or science based targets initiative (SBTi)). The rules may change limit ratios and/or electricity consumption. For example, region A is required to meet the limit ratio of 50% of renewable energy (i.e., as the target energy source) in 2023, in which self-built solar energy accounts for 5% of all renewable energy, green electricity accounts for 15% of all renewable energy, and certificates account for 30% of all renewable energy.

The contract data records the content of the contract. Changes in the content of the contract affects supply differences, such as the price difference of green electricity. Table (14) is an example illustrating the limit ratio and supply differences in multiple regions:

Table (14)

| Year | Region | Demand of green electricity (kWh) | Proportion of green electricity (as a percentage of total electricity) | Price difference of green electricity (yuan/kWh) | Limit ratio |
|------|--------|-----------------------------------|------------------------------------------------------------------------|---------------------------------------------------|-------------|
| 2023 | A | 1,000 | 1.4% | 20.5 | 90.6% |
| 2023 | B | 4,600 | 6.8% | 9.3 | 97% |
| 2023 | C | 4,600 | 6.8% | 9.3 | 80% |

Another example is the demand for certificates. Table (15) is an example illustrating the demand and price of certificates in multiple regions, and the total proportion of demand in each region is limited to 30%:

Table (15)

| Year | Region | Demand of certificate (kWh) | Proportion of certificate (as a percentage of total electricity) | Certificate of certificate (yuan/kWh) |
|------|--------|-----------------------------|------------------------------------------------------------------|----------------------------------------|
| 2023 | A | 2,000 | 2.8% | 10.0 |
| 2023 | B | 9,000 | 13.3% | 5.2 |
| 2023 | C | 9,400 | 13.9% | 5.0 |

The equipment change to a change in the quantity, model, service life, and/or application environment of (self-owned) power generation equipment capable of generating the target energy source. For example, the service life, sunshine duration, and placement area affect the electricity generation of solar power panels. The electricity generation generated by power generation equipment is the aforementioned self-supply amount and may affect the demand and/or the proportion of the electricity generation to all target energy sources. Table (16) is an example illustrating the electricity generation and proportions of multiple regions, assuming that the total proportion is 5%:

Table (16)

| Year | Region | Electricity generation generated by solar panels (kWh) | Proportion of electricity generation (as a percentage of total electricity) |
|------|--------|------|------|
| 2023 | A | 500 | 0.7% |
| 2023 | B | 1,500 | 2.2% |
| 2023 | C | 1,400 | 2.1% |

In one embodiment, the update module 134 may monitor the variation factor and determine whether the value or content of the variation factor changes. In response to a change in the variation factor or the change meeting the adjustment condition, the update module 134 may change the limit ratio, demand and/or supply difference, and adjust the recommended amount of the target energy source accordingly.

Taking region A as an example, compared with the information in January 2023, the values or contents of some variation factors have changed:

Table (17)

| Variation factor | Latest information obtained (January 2023) | Adjustment condition | Latest information obtained (March 2023) | Whether adjustment occurs |
|------|------|------|------|------|
| Self-built solar panel | Actual electricity generation: 42 kWh | Lower than year to month (YTM) electricity generation or Solar panel expansion | Actual electricity generation: 110 kWh (Lower than YTM electricity generation of 126 kWh) | Yes |
| Green electricity | Ratio: 90.6% | Limit ratio lower or higher than the previous information | Ratio: 90.6% | No |
| Certificate | Certificate of certificate: 10.0 (yuan/kWh) | Price lower than the next region or higher than the previous region | Price of certificate: 5.1 (Price lower than region B: 5.2) | Yes |

As long as any change in any of the variation factors meets the adjustment condition, the recommended amount of renewable energy may be adjusted accordingly. Year to month (YTM) is calculated by dividing the total annual electricity generation by 12 months. Taking region A as an example, 500/12 = 42 kWh. Therefore, the accumulated electricity generation from January 2023 to March 2023 is 42*3 = 126 kWh.

In one embodiment, the processor 13 may compare the recommended amount with the deficit between the target energy source and the incremental amount of the power generation equipment through the control module 135. Expanding the number, size or updating of power generation equipment may increase electricity generation and reduce the cost of purchasing other supply sources. The incremental amount is the electricity generation of new or updated power generation equipment. The deficit is the difference between the recommended amount and the incremental amount.

For example, the control module 135 may rank the corresponding costs of the recommended amounts in multiple regions:

Table (18)

| Year | Region | Recommended amount of renewable energy (kWh) | Cost of green electricity (yuan) | Cost of certificate (yuan) | Total cost of renewable energy (yuan) | Ranking |
|------|------|------|------|------|------|------|
| 2023 | A | 3,000 | 20,500 | 20,000 | 40,500 | 3 |
| 2023 | B | 13,600 | 42,780 | 46,800 | 89,580 | 2 |
| 2023 | C | 14,000 | 42,780 | 47,000 | 89,780 | 1 |

The incremental amount of solar panels may be configured based on the ranking in Table (18), where "ping" is about 3.3 m$^2$:

Table (19)

| Region | Area placed (ping) | Placement area available (ping) | Maximum incremental amount (kWh) |
|---|---|---|---|
| A | 50 | 0 | 0 |
| B | 110 | 20 | 273 (=1500/110*20), where 1,500 kWh is the electricity generation of solar panels in region B in 2023. |
| C | 90 | 30 | 467 |

In accordance with the ranking of the total cost of renewable energy in Table (18), if region C is the primary evaluated equipment expansion region, the objective is to ensure that the total cost is lower than the total cost of region B. Therefore, additional solar panels that may provide 400 kWh of electricity generation is required to be placed in region C, in which 400 kWh is the difference between 14,000 kWh (i.e., the recommended amount of renewable energy in region C) and 13,600 kWh (i.e., the recommended amount of renewable energy in region B). Based on the current electricity generation in region C, it is necessary to add an additional 26 ping (=400/1,400*90, based on the situation that the electricity generation efficiency, sunshine duration, and service life remain unchanged, and 1,400 kWh is the electricity generation of solar panels in region C in 2023) of solar panels. Similarly, for region B, if the total cost is to be lower than that of region A, additional solar panel with electricity generation of 10,600 kWh is required, which requires a solar panel area of 778 ping. After considering the current placement status in various regions, the expansion configuration of solar panels may be evaluated as follows:

Table (20)

| Regio n | Area placed (ping) | Area additionally placed (ping) | Incremental amount (kWh) | Deficit (kWh) |
|---|---|---|---|---|
| A | 50 | 0 | 0 | 0 |
| B | 110 | 20 | 273 | 10,327 (=10,600-273) |
| C | 90 | 26 | 400 | 0 |

The control module 135 may generate energy saving commands for production equipment according to the deficit. In response to the deficit being greater than the corresponding threshold, the control module 135 may generate an energy saving command. If the deficit in region B in Table (19) is greater than zero, the corresponding energy saving command may be generated. In response to the deficit not being greater than the corresponding threshold, the control module 135 may prohibit generating the energy saving command. If the deficit in regions A and C in Table (19) is zero, there is no need to provide energy-saving configurations. According to different application requirements, the production equipment may be manufacturing equipment in a factory, air conditioning equipment in an office, or power supply equipment in a vehicle, and not limited thereto. These production equipments require electricity to operate. The energy saving command is used to adjust the operation of the production equipment. Depending on the design requirements, the energy saving command may include the activation of energy saving mode, reduction of operational power, reduction of operational speed, or other commands aimed at decreasing electricity consumption. For example, Table (21) is an example of energy saving commands:

Table (21)

| Energy saving command | Impact on electricity usage | Current setting status (Annual average of 2022) | Minimum specifications for production |
|---|---|---|---|
| Reduction of air pressure | Reducing 1 bar may reduce air pressure electricity consumption by 6% | Pressure: 7.5 bar | Pressure $\geq$ 6.5 bar |
| Introduction of external air for cooling | Setting the air temperature threshold higher by 1°C may reduce air conditioning electricity consumption by 2% | External temperature threshold: 13°C | Indoor temperature threshold: 23-28°C<br><br>Indoor and outdoor temperature difference threshold $\geq$ 5°C |

(continued)

| Energy saving command | Impact on electricity usage | Current setting status (Annual average of 2022) | Minimum specifications for production |
|---|---|---|---|
| Recommend chilled water outlet temperature | Setting the chilled water outlet temperature higher by 1°C may reduce air conditioning electricity consumption by 1% | Chilled water outlet temperature: 3°C | Chilled water outlet temperature: 8°C |

The adjustment interval and energy savings may be determined through the minimum production specifications and the current status. For region B, the proportion of the four major types of electricity consumption in 2022 is: production: 25%; air conditioning: 35%; air pressure: 25%; basic: 15%, and the power saving is as follows:

Table (22)

| Energy saving command | Current setting status | 1 unit | 2 units | 3 units | 4 units | 5 units |
|---|---|---|---|---|---|---|
| Reduction of air pressure | Pressure: 7.5 bar | 180 kWh | - | - | - | - |
| Introduction of external air for cooling | External temperature threshold: 13 °C | 84 kWh | 168 kWh | 252 kWh | 336 kWh | 420 kWh |
| Recommend chilled water outlet temperature | Chilled water outlet temperature: 3°C | 42 kWh | 84 kWh | 126 kWh | 168 kWh | 210 kWh |

where 180 kWh = 12,000 kWh * 25% * 6%, and 12,000 kWh is the future consumption of region B in 2023. If it is expected that the total cost of region B is lower than the total cost of region A, then the energy savings may reach up to 810 kWh (=180+420+210) without affecting the production mode. The control module 135 may generate energy saving commands based on Table (22) and transmit the energy saving commands to the production equipment.

To sum up, in the energy allocation method and computing apparatus of the embodiment of the disclosure, the demand and supply differences are comprehensively considered, and the recommended amount of target energy is determined accordingly. In addition, embodiments of the disclosure may further generate energy saving commands for equipment to achieve the purpose of energy conservation and carbon reduction.

**Claims**

1. An energy allocation method, implementation by a processor (13), and **characterized in that** the energy allocation method comprises:

    determining a demand for a target energy source according to a limit ratio and electricity consumption, wherein the limit ratio is a proportion of the target energy source to all energy sources, and the electricity consumption is a statistic of the all energy sources used;
    comparing a supply difference between the target energy source and other energy sources among the all energy sources, wherein the all energy sources comprise the target energy source and the other energy sources, and the supply difference is a difference in payment amount to obtain energy source; and
    determining a target condition corresponding to the target energy source according to the demand and the supply difference, and determining a recommended amount of the target energy source according to the target condition.

2. The energy allocation method according to claim 1, wherein determining the demand for the target energy source according to the limit ratio and the electricity consumption comprises:
   obtaining the limit ratio from specification data by inputting the specification data into a ratio model, wherein the ratio model is trained by a machine learning algorithm, and the specification data is in a text form, and the machine learning algorithm comprises a natural language processing algorithm.

3. The energy allocation method according to claim 1 or claim 2, wherein the electricity consumption comprises a future consumption, and determining the demand for the target energy source according to the limit ratio and the electricity consumption comprises:

predicting a future consumption by inputting at least one electricity consumption factor into an electricity consumption evaluation model, wherein the electricity consumption evaluation model is trained through a machine learning algorithm, and the at least one electricity consumption factor comprises a historical consumption; or

predicting the future consumption according to a growth trend corresponding to the historical consumption.

4. The energy allocation method according to any one of claims 1-3, wherein determining the demand for the target energy source according to the limit ratio and the electricity consumption comprises:
obtaining payment amount of the target energy source and obtaining payment amount of the other energy sources from contract data by inputting the contract data into a payment model, wherein the payment model is trained through a machine learning algorithm, the supply difference is a difference between the payment amount to obtain the target energy source and the payment amount to obtain the other energy sources, and the contract data is in a text form, and the machine learning algorithm comprises a natural language processing algorithm.

5. The energy allocation method according to any one of claims 1-4, wherein the target condition corresponding to the target energy source comprises at least one of the following:

a total amount upper limit of at least one electricity consumption region;
a recommended amount of the at least one electricity consumption region and a weighted calculation corresponding to the supply difference; and
a recommended range of the at least one electricity consumption region.

6. The energy allocation method according to any one of claims 1-5, wherein determining the recommended amount of the target energy source according to the target condition comprises:

converting the target condition into a target function; and
determining the recommended amount according to at least one solution of the target function.

7. The energy allocation method according to any one of claims 1-6, further comprising:
adjusting the recommended amount according to at least one variation factor, wherein the at least one variation factor comprises at least one of rules, contracts, and equipment changes.

8. The energy allocation method according to any one of claims 1-7, further comprising:

comparing a deficit between the recommended amount and an incremental amount of power generation equipment of the target energy source; and
generating an energy saving command for a production equipment according to the deficit, wherein the energy saving command is used to adjust an operation of the production equipment.

9. A computing apparatus (10), comprising:

a storage (12), storing program code; and
a processor (13), coupling the storage (12), loading the program code, and the computing apparatus (10) is **characterized in that** the processor (13) executes:

determining a demand for a target energy source according to a limit ratio and electricity consumption, wherein the limit ratio is a proportion of the target energy source to all energy sources, and the electricity consumption is a statistic of the all energy sources used;
comparing a supply difference between the target energy source and other energy sources among the all energy sources, wherein the all energy sources comprise the target energy source and the other energy sources, and the supply difference is a difference in payment amount to obtain energy source; and
determining a target condition corresponding to the target energy source according to the demand and the supply difference, and determining a recommended amount of the target energy source according to the target condition.

10. The computing apparatus (10) according to claim 9, wherein the processor (13) further executes:
obtaining the limit ratio from specification data by inputting the specification data into a ratio model, wherein the ratio model is trained by a machine learning algorithm, and the specification data is in a text form, and the machine learning algorithm comprises a natural language processing algorithm.

11. The computing apparatus (10) according to claim 9 or claim 10, wherein the electricity consumption comprises a future consumption, and the processor (13) further executes:

predicting a future consumption by inputting at least one electricity consumption factor into an electricity consumption evaluation model, wherein the electricity consumption evaluation model is trained through a machine learning algorithm, and the at least one electricity consumption factor comprises a historical consumption; or

predicting the future consumption according to a growth trend corresponding to the historical consumption.

12. The computing apparatus (10) according to any one of claims 9-11, wherein the processor (13) further executes: obtaining payment amount of the target energy source and obtaining payment amount of the other energy sources from contract data by inputting the contract data into a payment model, wherein the payment model is trained through a machine learning algorithm, the supply difference is a difference between the payment amount to obtain the target energy source and the payment amount to obtain the other energy sources, and the contract data is in a text form, and the machine learning algorithm comprises a natural language processing algorithm.

13. The computing apparatus (10) according to any one of claims 9-12, wherein the target condition corresponding to the target energy source comprises at least one of the following:

a total amount upper limit of at least one electricity consumption region;

a recommended amount of the at least one electricity consumption region and a weighted calculation corresponding to the supply difference; and

a recommended range of the at least one electricity consumption region, and the processor (13) further executes:

converting the target condition into a target function; and

determining the recommended amount according to at least one solution of the target function.

14. The computing apparatus (10) according to any one of claims 9-13, wherein the processor (13) further executes: adjusting the recommended amount according to at least one variation factor, wherein the at least one variation factor comprises at least one of rules, contracts, and equipment changes.

15. The computing apparatus (10) according to any one of claims 9-14, wherein the processor (13) further executes:

comparing a deficit between the recommended amount and an incremental amount of power generation equipment of the target energy source; and

setting an energy saving mode of a production equipment according to the deficit.

**Amended claims in accordance with Rule 137(2) EPC.**

1. An energy allocation method, implementation by a processor (13), and the energy allocation method comprising:

determining a demand for a target energy source according to a limit ratio and electricity consumption, wherein the limit ratio is a proportion of the target energy source to all energy sources, and the electricity consumption is a statistic of the all energy sources used;

comparing a supply difference between the target energy source and other energy sources among the all energy sources, wherein the all energy sources comprise the target energy source and the other energy sources, and the supply difference is a difference in payment amount to obtain energy source; and

**characterized by** further comprising:

determining a target condition corresponding to the target energy source according to the demand and the supply difference, and determining a recommended amount of the target energy source according to the target condition,

wherein the target condition corresponding to the target energy source comprises a weighted calculation of a recommended amount of the target energy and a corresponding supply difference in at least one electricity consumption region.

2. The energy allocation method according to claim 1, wherein determining the demand for the target energy source according to the limit ratio and the electricity consumption comprises:
obtaining the limit ratio from specification data by inputting the specification data into a ratio model, wherein the ratio model is trained by a machine learning algorithm, and the specification data is in a text form, and the machine learning algorithm comprises a natural language processing algorithm.

3. The energy allocation method according to claim 1 or claim 2, wherein the electricity consumption comprises a future consumption, and determining the demand for the target energy source according to the limit ratio and the electricity consumption comprises:

    predicting a future consumption by inputting at least one electricity consumption factor into an electricity consumption evaluation model, wherein the electricity consumption evaluation model is trained through a machine learning algorithm, and the at least one electricity consumption factor comprises a historical consumption; or
    predicting the future consumption according to a growth trend corresponding to the historical consumption.

4. The energy allocation method according to any one of claims 1-3, wherein determining the demand for the target energy source according to the limit ratio and the electricity consumption comprises:
obtaining payment amount of the target energy source and obtaining payment amount of the other energy sources from contract data by inputting the contract data into a payment model, wherein the payment model is trained through a machine learning algorithm, the supply difference is a difference between the payment amount to obtain the target energy source and the payment amount to obtain the other energy sources, and the contract data is in a text form, and the machine learning algorithm comprises a natural language processing algorithm.

5. The energy allocation method according to any one of claims 1-4, wherein the target condition corresponding to the target energy source comprises at least one of the following:

    a total amount upper limit in the at least one electricity consumption region; and
    a recommended range of the target energy source in the at least one electricity consumption region.

6. The energy allocation method according to any one of claims 1-5, wherein determining the recommended amount of the target energy source according to the target condition comprises:

    converting the target condition into a target function; and
    determining the recommended amount according to at least one solution of the target function.

7. The energy allocation method according to any one of claims 1-6, further comprising:
adjusting the recommended amount according to at least one variation factor, wherein the at least one variation factor comprises at least one of rules, contracts, and equipment changes.

8. The energy allocation method according to any one of claims 1-7, further comprising:

    comparing a deficit between the recommended amount and an incremental amount of power generation equipment of the target energy source; and
    generating an energy saving command for a production equipment according to the deficit, wherein the energy saving command is used to adjust an operation of the production equipment.

9. A computing apparatus (10), comprising:

    a storage (12), storing program code; and
    a processor (13), coupling the storage (12), loading the program code, and the processor (13) configured to execute:

        determining a demand for a target energy source according to a limit ratio and electricity consumption, wherein the limit ratio is a proportion of the target energy source to all energy sources, and the electricity consumption is a statistic of the all energy sources used;
        comparing a supply difference between the target energy source and other energy sources among the all energy sources, wherein the all energy sources comprise the target energy source and the other energy sources, and the supply difference is a difference in payment amount to obtain energy source; and **characterized in that** the processor (13) is configured to further execute:

determining a target condition corresponding to the target energy source according to the demand and the supply difference, and determining a recommended amount of the target energy source according to the target condition,
wherein the target condition corresponding to the target energy source comprises a weighted calculation of a recommended amount of the target energy and a corresponding supply difference in at least one electricity consumption region.

10. The computing apparatus (10) according to claim 9, wherein the processor (13) further executes:
obtaining the limit ratio from specification data by inputting the specification data into a ratio model, wherein the ratio model is trained by a machine learning algorithm, and the specification data is in a text form, and the machine learning algorithm comprises a natural language processing algorithm.

11. The computing apparatus (10) according to claim 9 or claim 10, wherein the electricity consumption comprises a future consumption, and the processor (13) further executes:

predicting a future consumption by inputting at least one electricity consumption factor into an electricity consumption evaluation model, wherein the electricity consumption evaluation model is trained through a machine learning algorithm, and the at least one electricity consumption factor comprises a historical consumption; or
predicting the future consumption according to a growth trend corresponding to the historical consumption.

12. The computing apparatus (10) according to any one of claims 9-11, wherein the processor (13) further executes:
obtaining payment amount of the target energy source and obtaining payment amount of the other energy sources from contract data by inputting the contract data into a payment model, wherein the payment model is trained through a machine learning algorithm, the supply difference is a difference between the payment amount to obtain the target energy source and the payment amount to obtain the other energy sources, and the contract data is in a text form, and the machine learning algorithm comprises a natural language processing algorithm.

13. The computing apparatus (10) according to any one of claims 9-12, wherein the target condition corresponding to the target energy source comprises at least one of the following:

a total amount upper limit in the at least one electricity consumption region; and
a recommended range of the target energy source in the at least one electricity consumption region, and the processor (13) further executes:

converting the target condition into a target function; and
determining the recommended amount according to at least one solution of the target function.

14. The computing apparatus (10) according to any one of claims 9-13, wherein the processor (13) further executes:
adjusting the recommended amount according to at least one variation factor, wherein the at least one variation factor comprises at least one of rules, contracts, and equipment changes.

15. The computing apparatus (10) according to any one of claims 9-14, wherein the processor (13) further executes:

comparing a deficit between the recommended amount and an incremental amount of power generation equipment of the target energy source; and
setting an energy saving mode of a production equipment according to the deficit.

**10**

Computing apparatus

**13**

| 11 — | Input apparatus | | Processor |

| | | | **131** — Limit module |
| | | | **132** — Difference module |
| | | | **133** — Optimization module |
| 12 — | Storage | | **134** — Update module |
| | | | **135** — Control module |

FIG. 1

The demand for target energy is determined based on the limit ratio and electricity consumption — S210

The supply difference between the target energy and other energy sources in all energy sources is compared — S220

The target conditions corresponding to the target energy are determined based on the demand and supply differences, and the recommended amount of target energy is determined based on the target conditions — S230

# FIG. 2

| Ratio model is trained | S310 |

↓

| The limit ratio is obtained from the specification data by inputting the specification data into the ratio model | S320 |

# FIG. 3

| Electricity consumption evaluation model is trained | S410 |

↓

| Future consumption is predicted by inputting electricity consumption factors into the electricity consumption evaluation model | S420 |

# FIG. 4

Payment model is trained — S510

The payment amount of the target energy and the payment amount of other energy sources are obtained from the contract data by inputting the contract data into the payment model — S520

# FIG. 5

The target conditions are converted into target functions — S610

The recommended amount is determined according to the solution of the target function — S620

# FIG. 6

**EUROPEAN SEARCH REPORT**

Europäisches
Patentamt
European
Patent Office
Office européen
des brevets

Application Number

EP 24 19 3848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 477 786 A (GUANGZHOU XINGWU INTELLIGENT TECH CO LTD) 30 January 2024 (2024-01-30) | 1,3,5-9, 11,13-15 | INV. G06Q10/04 G06Q50/06 |
| Y | * paragraph [0001] - paragraph [0032] * | 2,4,10, 12 | |
| Y | YANG ZHIYUAN ET AL: "Evaluation of Smart Energy Management Systems and Novel UV-Oriented Solution for Integration, Resilience, Inclusiveness and Sustainability", 2020 5TH INTERNATIONAL CONFERENCE ON UNIVERSAL VILLAGE (UV), IEEE, 24 October 2020 (2020-10-24), pages 1-49, XP033914325, DOI: 10.1109/UV50937.2020.9426217 [retrieved on 2021-05-06] | 2,4,10, 12 | |
| A | * See Introduction * | 1,3,5,9 | |
| A | ZAKIZADEH MAHDIEH ET AL: "AI-Driven Energy Intelligence: Revolutionizing the Energy Sector through Smart Energy Solutions", 2024 10TH INTERNATIONAL CONFERENCE ON WEB RESEARCH (ICWR), IEEE, 24 April 2024 (2024-04-24), pages 355-363, XP034607979, DOI: 10.1109/ICWR61162.2024.10533346 [retrieved on 2024-05-21] * the whole document * | 1-15 | |
| A | AU 2018 219 961 A1 (GRIDDY HOLDINGS LLC [US]) 19 September 2019 (2019-09-19) * the whole document * | 1-15 | |
| A | KR 2020 0059694 A (HYUNDAI ENG & CONSTRUCT CO LTD [KR]) 29 May 2020 (2020-05-29) * paragraph [0001] - paragraph [0020] * | 1,3,9,11 | |

**TECHNICAL FIELDS SEARCHED (IPC)**

G06Q

The present search report has been drawn up for all claims

| Place of search | Date of completion of the search | Examiner |
|---|---|---|
| Munich | 23 January 2025 | Jullien, Sami |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 3848

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | | Publication date | Patent family member(s) | | Publication date |
|---|---|---|---|---|---|
| CN 117477786 | A | 30-01-2024 | NONE | | |
| AU 2018219961 | A1 | 19-09-2019 | AU | 2018219961 A1 | 19-09-2019 |
| | | | AU | 2023278132 A1 | 04-01-2024 |
| | | | EP | 3580719 A2 | 18-12-2019 |
| | | | JP | 2020510945 A | 09-04-2020 |
| | | | US | 2019372345 A1 | 05-12-2019 |
| | | | US | 2023006444 A1 | 05-01-2023 |
| | | | US | 2025007284 A1 | 02-01-2025 |
| | | | WO | 2018148732 A2 | 16-08-2018 |
| KR 20200059694 | A | 29-05-2020 | NONE | | |

EPO FORM P0459

For more details about this annex : see Official Journal of the European Patent Office, No. 12/82